# EUROPEAN PATENT SPECIFICATION

(11) **EP 2 470 600 B1**
(45) Date of publication and mention of the grant of the patent: **17.07.2013**
(21) Application number: 10751853.2
(22) Date of filing: 17.08.2010
(51) Int. Cl.: C08K 13/02, C08K 5/00, C08K 3/34, C08K 5/134, C08K 5/3492

(54) **POLYPROPYLENE-TALC COMPOSITE WITH REDUCED MALODOUR**
POLYPROPYLEN-TALKUM-VERBUNDSTOFF MIT VERRINGERTEM SCHLECHTEN GERUCH
COMPOSITE DE POLYPROPYLÈNE ET DE TALC DONT LA MAUVAISE ODEUR EST DIMINUÉE

(30) Priority: 28.08.2009 EP 09168893
(43) Date of publication of application: 04.07.2012
(60) Divisional application: 12181273.9
(73) Proprietor: Borealis AG, 1220 Vienna (AT)
(72) Inventor: KASTNER, Erwin, A-4040 Linz (AT); LEDERER, Klaus, A-4020 Linz (AT); OTTE, Michael, A-4560 Kirchdorf/Krems (AT); SIEBERT, Hartmut, 79588 Efringen-Kirchen (DE); DICKE, René, A-4060 Leonding (AT)
(74) Representative: Lux, Berthold
(86) International application number: PCT/EP2010/061967
(87) International publication number: WO 2011/023594

(56) References cited:
- WO-A-2009/092691
- US-A- 4 259 456
- US-A- 5 077 328
- US-B2- 6 794 032

## Description

The present invention relates a new polypropylene composition comprising phenolic antioxidants and the use of a triazine derivative in polymer compositions.

Polypropylene is the material of choice for many applications. For instance polypropylene in combination with talc is used as back sheets of blister packaging as well as in articles in the automotive interior. Said polypropylene/talc compositions are - generally speaking - good processable and can be individually customized. However, such materials must also provide long term stability against environmental impacts, like oxidative degradation, keeping the tailored properties of the polypropylene/talc composition on the desired level. Accordingly antioxidants are added to impair the degradation of the polypropylene/talc compositions. Over the last years the standard requirements for long term stability have been even steadily tightened, which in turn increased the amounts of additives to satisfy the ambitioned desires, like heat resistance and/or mechanical properties. On the other hand such an increasing amount of additives intensifies the risk of side reactions. Such side reactions lead to side products, like aldehyd compounds or ketone compounds, being quite often volatile. Of course volatile compounds should be kept on low levels in particular as they are not accepted by the customers. Additionally it has been observed that such compounds suffer from malodour.

US 4,259,456 discloses the use of a secondary alkane sulfonate in combination with a nitrogen compound, such as melamine, for producing polyolefin resin compositions containing inorganic fillers with no problems of unpleasant odor.

US 6,794,032 B2 discloses the use of melamine and its derivatives for reducing odor emission of fiber-reinforced polyolefin compositions, which can be used in the interior of vehicles.

Thus the object of the present invention is to reduce the sensory impression of smell of polymers, in particular of the automotive interior articles. A further object of the present invention is to reduce the amount of volatile compounds of polymers and/or of an automotive interior article. There is in particular the desire to reduce the sensory impression of smell measured according to VDA 270 and optionally the amount of headspace emission according to VDA 277. Additionally reduction of volatiles and/or the reduction of smell shall be preferably not obtained at the expense of the mechanical properties.

The first finding of the present invention is that the main causer of malodour are aldehyds and/or ketones being inter alia the degradation products of polymers, like polyethylene. The second finding of the present invention is that triazine derivatives act as scavenger of those degradation products.

Thus the present invention is directed to a polymer composition as defined in claim 1.

Preferably the heterophasic propylene copolymer (A1) is present in the inventive composition in the amount of at least 60.0 wt.%, yet more preferably at least 70.0 wt.-%, still more preferably of at least 75.0 wt.-%. Further it is appreciated that the heterophasic propylene copolymer (A1) is the only polymer component within the polymer composition.

The above defined polymer composition can comprise additionally a hindered amine light stabilizer (HALS) and/or a slip agent (S).

As usual 1 ppm of additive corresponds to 1 mg additive in 1 kg composition.

Surprisingly it has been found out that the use of the triazine derivative (T) in a polymer composition containing talc (B) and organic antioxidants (C) resolves the problem of malodour measured according VDA 270. Additionally the employment of triazine derivatives (T) allows reducing significantly the amount of volatiles measured according headspace emission according to VDA 277 compared to standard polypropylene compositions comprising talc and organic antioxidants without any scavenger. Even more surprising this benefit is not paid with the loss of mechanical properties, like tensile modulus and/or flexural modulus (see table 1).

To obtain the desired improvement of sensory impression according to VDAA 270 and/or the reduction of volatiles according to VDA 277 by keeping the mechanical properties on the desired level, it is appreciated to use the triazine derivative (T) in the polymer composition in an amount from 2,000 to 20,000 ppm, more preferably from 5,000 to 10,000 ppm.

Without be bonded on the theory the triazine derivative (T) as used in the present invention is able to reduce the amount of aldehyde compounds and/or keton compounds occuring as degradation products of polymeric material. Thus the triazine derivatives (T) of the present invention are used as scavengers of aldehydes and/or ketones occuring in a polymer composition, in particular in a polymer composition according to the instant invention.

The term "volatiles" is understood according to the present invention as substances which tend to vaporize from the polymer composition. More precisely "volatiles" are substances having a rather high vapour pressure and thus vaporize easily from the polymer composition. Preferred volatiles are those being gaseous at 130 °C or below (atmospheric pressure), more preferably at 120 °C or below (atmospheric pressure). Volatilese according to this invention arc in particular substances which are detectable according to VDA 277. The volatiles can be any substances part of the polymer composition and are in particular degradation products caused by chemical and/or physical reactions (processes) within the polymer compositions. Typically the volatiles are degradation products of the polymer(s) and/or additives of the polymer composition, like degradation products of the polypropylene and/or the organic antioxidants, like (hindered) phenolic antioxidants as defined herein. The amount of volatiles of the polymer composition is determined by VDA 277. The exact measuring method is described in the example section. The analysed amount of volatiles is given by the ratio of the amount [µgC] of volatiles to the total amount [g] of the polymer composition.

Accordingly in one aspect the use of the triazine derivative (T) in a polymer composition accomplishes a headspace emission measured according to VDA 277 of all volatiles together of said polymer composition of equal or below 50 µgC/g, preferably below 40 µgC/g, more preferably below 30 µgC/g. still more preferably below 25 µgC/g.

In a second aspect or alternatively the use of the triazine derivative (T) in a polymer composition accomplishes a sensory impression of smell measured according to VDA 270 below 4.0, more preferably not more than 3.5.

In case of automotive components a preferred polymer composition comprises as the only polymer component, a heterophasic propylene copolymer (A1).

The expression propylene homopolymer used in the instant invention relates to a polypropylene that consists substantially, i.e. of more than 99.5 wt.-%, still more preferably of at least 99.7 wt.-%, like of at least 99.8 wt.-%, of propylene units. In a preferred embodiment only propylene units in the propylene homopolymer are detectable. The comonomer content can be determined with FT infrared spectroscopy, as described below in the examples.

Heterophasic polypropylene systems are well known in the art and are systems in particular obtained in an at least two step process resulting in a multiphase structure comprising a polypropylene matrix (A¹), preferably an isotactic polypropylene matrix, and inclusions dispersed therein comprising amorphous elastomer (A²). Such systems can be easily tailored for the requirements needed by setting the comonomer content in the polypropylene matrix and in the amorphous elastomer respectively. Such a heterophasic propylene copolymer (A1) may have an MFR₂ in the range of 2.0 to 80.0 g/10min, more preferably in the range of 5.0 to 50.0 g/10min, still more preferably in the range of 7.0 to 20.0 g/10min. Typically such a heterophasic propylene copolymer (A1) has an amorphous elastomer being a propylene-ethylene rubber (EPR). The polypropylene matrix can be either a propylene homopolymer or a propylene copolymer, wherein the latter is especially preferred. The total comonomer, preferably ethylene, content is in the range of 2 to 25 wt.-% based on the total heterophasic propylene copolymer (A1). The amount of xylene solubles may be in the range of 10 to 40 wt.-%, preferably 15 to 30 wt.-%.

Of course the polypropylene may additionally comprise beside the heterophasic propylene copolymer (A1) a high density polyethylene (HDPE) having for instance a density in the range of 0.954 to 0.966 g/cm3 and a melt flow rate (MFR₂ at 190 °C) of 0.1 to 15.0 g/10min. Further the polypropylene (A) may also comprise additionally EPR, propylene-ethylene copolymers and/or ethylene-octene copolymers.

It is however, preferred that the polypropylene (A1) is the only polymer component in the polymer composition.

Accordingly it is appreciated that the polypropylene (A1) is present in the polymer composition in the amount of at least 50.0 wt.-% , more preferably at least 60.0 wt.-%, yet more preferably at least 70.0 wt.-%, still more preferably of at least 75.0 wt.-%.

Beside the polypropylene (A1) the polymer composition is in particular defined by its additives.

Accordingly to be useful in the above mentioned applications the inventive polymer composition must comprise an inorganic reinforcing agent. Talc is the additive of choice. Talc (B) is usually used to support the crystallization behaviour of the polymer material. It can be also employed as a shrinkage reducing additive and/or reinforcing agent. In any case talc (B) has been recognized in the above mentioned applications as an indispensable part of polypropylene compositions. Talc (B) is a mineral composed of hydrated magnesium silicate and may comprise low amounts of residues, like iron oxide (FeO; Fe₂O₃) and/or iron silicate. Generally the amounts of residues do not exceed 5.0 wt.-%. Thus it is preferred that the talc (B) comprise 0.1 to 3.5 wt.-%, more preferably 0.1 to 3.0 wt.-%, residues, i.e. residues comprising iron, like iron oxide or iron silicate. Of course talc (B) may also be a chlorite-talc as the commercial product "Steamic T1 C A" of Luzenac.

Preferably the talc (B) according to this invention has a particle size (d50%) of below 3.0 µm (d50% indicates that 50 wt-% of the talc has a particle size below 3.0 µm) and/or a particle size (d98%) of below 15.0 µm (d98% indicates that 98 wt-% of the talc has a particle size below 15.0 µm), more preferably a particle size (d50%) of below 2.0 µm and/or a particle size (d98%) of below 10.0 µm, yet more preferably a particle size (d50%) of below 1.0 µm and/or a particle size (d98%) of below 5.0 µm.

However, it has been discovered in the present invention that talc (B) promotes the degradation of organic antioxidants and thus increases undesirably the amount of volatiles. Also the smell disturbances are enhanced. Such a degradation of organic antioxidants is in particular pronounced in case the talc comprises a considerable amount of residues within in the talc, like iron oxide (FeO, Fe₂O₃) and/or iron silicate. The degradation of the organic oxidants can be very easily deducted in the headspace emission according to VDA 277.

Also the smell disturbances possibly caused by the degradation of antioxidants but also of the degradation of the polymer can be measured according to the smell detection method according to VDA 270.

The present invention has now found out that that the reduction of smell disturbances and/or of volatiles is accomplished by adding a triazine derivative (T) to a polymer composition comprising components (A1), (B), (C) and optionally (E), as defined in claim 1.

Advantageously the triazine derivative (T) does not impede the mechanical properties of the polymer composition needed for the end applications as for instance for automotive interior articles.

Accordingly 1, 3, 5 triazine derivatives (T) of formula (I) 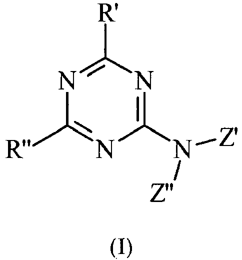 wherein
R' and R" are independently selected from the group, NHZ', NZ'Z", C1 to C 10 alkyl, phenyl, and benzyl
Z' and Z" are independently selected from the group H, methyl, ethyl, n-propyl, iso-propyl, n-butyl, tert-butyl, and n-pentyl.

More preferably
the residues R" and NZ'Z" are both NH₂, and
R' is either , NZ'Z", preferably NH₂, methyl, or phenyl.

Especially good results can be obtained with the triazine derivatives (T) of formula (Ia), (Ib) and (Ic) [melamine derivative] 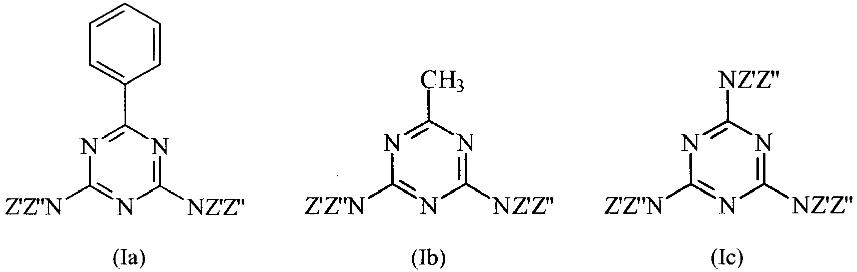 wherein
Z' and Z" are independently selected from the group consisting of H, methyl, ethyl, n-propyl, iso-propyl, n-butyl, tert-butyl, and n-pentyl, preferably independently selected from the group consisting of H, methyl, ethyl, iso-propyl, and tert-butyl.

Thus especially suitable are the triazine derivatives (T) of formula (Id), (Ie) and (If) [melamine]

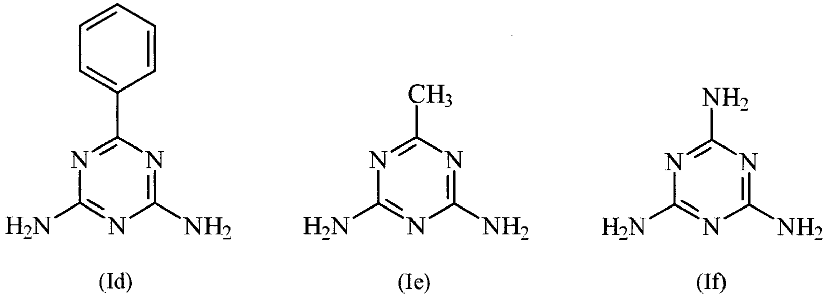

Melamine is most preferred as triazine derivative.

As indicated above, the smell disturbances and the increase of volatiles are also observed due to the presence of organic antioxidants as they can be degraded due to polymeric environment, i.e. due to other additives like talc (B). However, antioxidants are needed to impair oxidative degradation of the polypropylene. Accordingly the polymer composition for which the triazine derivative (T) is used contains organic antioxidants (C). The term "organic antioxidant (C)" according to this invention stands preferably for all possible compounds capable of slowing or preventing the oxidation of the polymer component, e.g. the polypropylene (A). However, in a preferred embodiment the phosphorous antioxidant (E) as defined in the instant invention is not subsumed under the term "organic antioxidant (C)". Particularly preferred is the organic antioxidant (C) a phenolic antioxidant.

The term "phenolic antioxidant" as used in the instant invention stands for any compound capable of slowing or preventing the oxidation of the polymer component, e.g. the polypropylene (A1). Additionally such a phenolic antioxidant must of course comprise a phenolic residue.

Better results can be achieved in case the organic antioxidant (C), preferably the phenolic antioxidant, is sterically hindered. The term "Sterically hindered" according to this invention means that the hydroxyl group (HO-) of the organic antioxidant (C), preferably the phenolic antioxidant, is surrounded by sterical alkyl residues.

Accordingly the phenolic antioxidant preferably comprises the residue of formula (II) 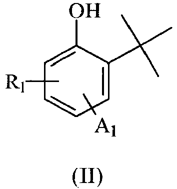 wherein
R₁ being located at the ortho- or meta-position to the hydroxyl-group and R₁ is (CH₃)₃C-, CH₃- or H, preferably (CH₃)₃C-, and
A₁ constitutes the remaining part of the phenolic antioxidant and is preferably located at the para-position to the hydroxyl-group.

Preferably the phenolic antioxidants preferably comprise the residue of formula (IIa) 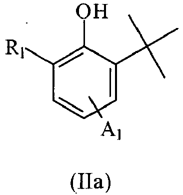 wherein
R₁ is (CH₃)₃C-, CH₃- or H, preferably (CH₃)₃C-, and
A₁ constitutes the remaining part of the phenolic antioxidant.

Preferably A₁ is in para-position to the hydroxyl-group.

Additionally the organic antioxidant (C), preferably the phenolic antioxidant, shall preferably exceed a specific molecular weight. Accordingly the organic antioxidant (C), preferably the phenolic antioxidant, has preferably a molecular weight of more than 785 g/mol, more preferably more than 1100 g/mol. On the other hand the molecular weight should be not too high, i.e. not higher than 1300 g/mol. A preferred range is from 785 to 1,300 g/mol, more preferably from 1,000 to 1,300 g/mol, yet more preferably from 1,100 to 1,300 g/mol.

Further the organic antioxidant (C), preferably the phenolic antioxidant, can be additionally defined by the amount of phenolic residues, in particular by the amount of phenolic residues of formula (II) or (IIa). Accordingly the phenolic antioxidant may comprises1, 2, 3, 4 or more phenolic residues, preferably 1, 2, 3, 4 or more phenolic residues of formula (II) or (IIa).

Moreover the organic antioxidant (C), preferably the phenolic antioxidant, comprises mainly only carbon atoms, hydrogen atoms and minor amounts of O-atoms, mainly caused due to the hydroxyl group (HO-) of the phenolic residues. However, the organic antioxidant (C), preferably the phenolic antioxidant, may comprise additionally minor amounts of N, S and P atoms. Preferably the organic antioxidant (C), preferably the phenolic antioxidant, is constituted by C, H, O, N and S atoms only, more preferably the organic antioxidant (C), preferably the phenolic antioxidant, is constituted by C, H and O only.

As stated above the organic antioxidant (C), preferably the phenolic antioxidant, shall have a rather high molecular weight. A high molecular weight is an indicator for several phenolic residues. Thus it is in particular appreciated that the organic antioxidant (C), preferably the phenolic antioxidant, has 4 or more, especially 4, phenolic residues, like the phenolic residue of formula (II) or (IIa).

As especially suitable phenolic antioxidants has been recognized compounds comprising at least one residue of formula (III) 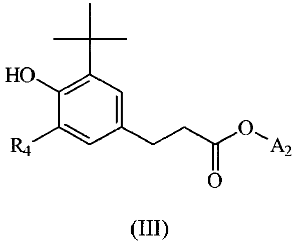 wherein
R₄ is (CH₃)₃C-, CH₃-, or H, preferably (CH₃)₃C-, and
A₂ constitutes the remaining part of the phenolic antioxidant.

Considering the above requirements the phenolic antioxidants is preferably selected from the group consisting of
2,6-di-tert-butyl-4-methylphenol (CAS no. 128-37-0; M 220 g/mol),
pentaerythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
1,3,5-trimethyl-2,4,6-tris-(3,5-di-tert-butyl-4-hydroxybenzyl) benzene (CAS no. 1709-70-2; M 775 g/mol),
2,2'-thiodiethylenebis (3,5-di-tert.-butyl-4-hydroxyphenyl) propionate (CAS no. 41484-35-9; M 643 g/mol),
calcium bis(ethyl 3,5-di-tert-butyl-4-hydroxybenzylphosphonate) (CAS no. 65140-91-2; M 695 g/mol),
1,3,5-tris(3',5'-di-tert. butyl-4'-hydroxybenzyl)-isocyanurate (CAS no. 27676-62-6, M 784 g/mol),
1,3,5-tris(4-tert. butyl-3-hydroxy-2,6-dimethylbenzyl)-1,3,5-triazine-2,4,6-(1H,3H,5H)-trione (CAS no. 40601-76-1, M 813 g/mol),
bis(3,3-bis(3'-tert-butyl-4'-hydroxyphenyl)butanic acid) glycolester (CAS no. 32509-66-3; M 794 g/mol),
4,4'-thiobis(2-tert-butyl-5-methylphenol) (CAS no. 96-69-5; M 358 g/mol),
2,2'-methylene-bis-(6-(1-methyl-cyclohexyl)-para-cresol) (CAS no. 77-62-3; M 637 g/mol),
3,3'-bis(3,5-di-tert-butyl-4-hydroxyphenyl)-N,N'-hexamethylenedipropionamide (CAS no. 23128-74-7; M 637 g/mol),
2,5,7,8-tetramethyl-2-(4',8',12'-trimethyltridecyl)-chroman-6-ol (CAS no. 10191-41-0; M 431 g/mol),
2,2-ethylidenebis (4,6-di-tert-butylphenol) (CAS no. 35958-30-6; M 439 g/mol), 1,1,3-tris(2-methyl-4-hydroxy-5'-tert-butylphenyl) butane (CAS no. 1843-03-4; M 545 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethytethyl)-4-hydroxybenzene)propanoate) (CAS no. 35074-77-2; M 639 g/mol),
2,6-di-tert-butyl-4-nonylphenol (CAS no. 4306-88-1; M 280 g/mol),
4,4'-butylidenebis(6-tert-butyl-3-methylphenol (CAS no. 85-60-9; M 383 g/mol);
2,2'-methylene bis(6-tert-butyl-4-methylphenol) (CAS no. 119-47-1; M 341 g/mol),
triethylenglycol-bis-(3-tert-butyl-4-hydroxy-5-methylphenyl) propionate (CAS no. 36443-68-2; M 587 g/mol),
a mixture of C 13 to C 15 linear and branched alkyl esters of 3-(3',5'-di-t-butyl-4'-hydroxyphenyl) propionic acid (CAS no. 171090-93-0; M_{w} 485 g/mol),
6,6'-di-tert-butyl-2,2'-thiodip-cresol (CAS no. 90-66-4; M 359 g/mol),
diethyl-(3,5-di-tert-butyl-4-hydroxybenzyl) phosphate (CAS no. 976-56-7; M 356 g/mol),
4,6-bis (octylthiomethyl)-o-cresol (CAS no. 110553-27-0; M 425 g/mol),
benzenepropanoic acid, 3,5-bis(1,1-dimehtyl-ethyl)-4-hydroxy-,C7-C9-branched and linear alkyl esters (CAS no. 125643-61-0; M_{w} 399 g/mol),
1,1,3-tris[2-methyl-4-[3-(3,5-di-tert-butyl-4-hydroxyphenyl)propionyloxy]-5-tert-butylphenyl]butane (CAS no. 180002-86-2; M 1326 g/mol),
mixed styrenated phenols (M ca 320 g/mol; CAS no. 61788-44-1; M ca. 320 g/mol),
butylated, octylated phenols (M ca 340 g/mol; CAS no. 68610-06-0; M ca 340 g/mol), and
butylated reaction product of p-cresol and dicyclopentadiene (M_{w} 700 to 800 g/mol; CAS no. 68610-51-5; M_{w} 700 - 800 g/mol).

More preferably the phenolic antioxidant is selected from the group consisting of
pentaerythrityl-tetrakis (3-(3,5-di-tert-butyl-4-hydroxyphenyl) propionate (CAS no. 6683-19-8; M 1178 g/mol),
octadecyl 3-(3',5'-di-tert-butyl-4-hydroxyphenyl)propionate (CAS no. 2082-79-3; M 531 g/mol)
bis(3,3-bis(3'-tert-butyl-4'-hydroxyphenyl)butanic acid) glycolester (CAS no. 32509-66-3; M 794 g/mol),
3,3'-bis(3,5-di-tert-butyl-4-hydroxyphenyl)-N,N'-hexamethylenedipropionamide (CAS no. 23128-74-7; M 637 g/mol),
3,9-bis(1,1-dimethyl-2-(beta-(3-tert-butyl-4-hydroxy-5-methylphenyl)propionyloxy)ethyl)-2,4,8,10-tetraoxaspiro[5.5]undecane (CAS no. 90498-90-1; M 741 g/mol),
1,6-hexanediyl-bis(3,5-bis(1,1dimethylethyl)-4-hydroxybenzene)propanoate) (CAS no. 35074-77-2; M 639 g/mol),
triethylenglycol-bis-(3-tert-butyl-4-hydroxy-5-methylphenyl) propionate (CAS no. 36443-68-2; M 587 g/mol),
a mixture of C13 to C15 linear and branched alkyl esters of 3-(3',5'-di-t-butyl-4'-hydroxyphenyl) propionic acid (CAS no. 171090-93-0; M_{w} 485 g/mol), and
benzenepropanoic acid, 3,5-bis(1,1-dimehtyl-ethyl)-4-hydroxy-,C7-C9-branched and linear alkyl esters (CAS no. 125643-61-0; M_{w} 399 g/mol),

The most preferred phenolic antioxidant is pentaerythrityl-tetrakis (3-(3,5-di-tert-butyl-4-hydroxyphenyl) propionate (CAS no. 6683-19-8; M 1178 g/mol) preferably having the formula (IV)

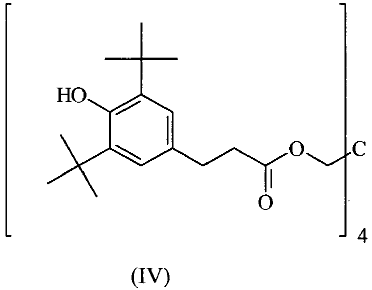

The present polymer composition may comprise different phenolic antioxidants as defined in the instant invention, however, it is preferred that it comprises only one type of phenolic antioxidant as defined herein.

The polymer composition can additionally comprise one or more phosphorous antioxidants (E). More preferably the polymer composition comprises only one type of phosphorous antioxidant (E). Preferred phosphorous antioxidants (E) are selected from the group consisting of
tris-(2,4-di-tert-butylphenyl) phosphite (CAS no. 31570-04-4; M 647 g/mol),
tetrakis-(2,4-di-tert-butylphenyl)-4,4'-biphenylen-di-phosphonite (CAS no. 38613-77-3; M 991 g/mol),
bis-(2,4-di-tert-butylphenyl)-pentaerythrityl-di-phosphite (CAS no. 26741-53-7; M 604 g/mol),
di-stearyl- pentaerythrityl-di-phosphite (CAS no. 3806-34-6; M 733 g/mol),
tris-nonylphenyl phosphite (CAS no. 26523-78-4; M 689 g/mol),
bis(2,6-di-tert-butyl-4-methylphenyl)pentaerythrityl-di-phosphite (CAS no. 80693-00-1; M 633 g/mol),
2,2'-methylenebis (4,6-di-tert-butylphenyl) octyl-phosphite (CAS no. 126050-54-2; M 583 g/mol),
1,1,3-tris (2-methyl-4-ditridecyl phosphite-5-tert-butylphenyl) butane (CAS no. 68958-97-4; M 1831 g/mol),
4,4'-butylidenebis (3-methyl-6-tert-butylphenyl-di-tridecyl) phosphite (CAS no. 13003-12-8; M 1240 g/mol),
bis-(2,4-dicumylphenyl)pentaerythritol diposphite (CAS no. 154862-43-8; M 852 g/mol),
bis(2-methyl-4,6-bis(1,1-dimethylethyl) phenyl) phosphorous acid ethylester (CAS no. 145650-60-8; M 514 g/mol),
2,2',2"-nitrilo triethyl-tris(3,3',5,5'-tetra-tert-butyl-1,1'-biphenyl-2,2'-diyl)phosphite) (CAS no. 80410-33-9; M 1465 g/mol)
2,4,6-tris(tert-butyl)phenyl-2-butyl-2-ethyl-1,3-propandiolphosphit (CAS no. 161717-32-4, M 450 g/mol),
2,2'-ethyliden-bis(4,6-di-tert-butylphenyl)fluorphosphonit (CAS no. 118337-09-0; M 487 g/mol),
6-(3-(3-tert-butyl-4-hydroxy-5-methylphenyl)propoxy)-2,4,8,10-tetra-tert-butyldibenz[d,f][1.3.2]dioxaphosphepin (CAS no. 203255-81-6; M 660 g/mol),
tetrakis-(2,4-di-tert-butyl-5-methylphenyl)-4,4'-biphenylen-di-phosphite (CAS no. 147192-62-9; M 1092 g/mol), and
1,3-bis-(diphenylphosphino)-2,2-dimethylpropane (CAS no. 80326-98-3; M 440.5 g/mol).

Especially suitable are organic phosphites, in particular those as defined in the above list, as phosphorous antioxidants (E).

The most preferred phosphorous antioxidant (E) is tris-(2,4-di-tert-butylphenyl) phosphite (CAS no. 31570-04-4; M 647 g/mol).

As further additives the polypropylene composition preferably comprises at least one hindered amine light stabilizer. Accordingly such hindered amine light stabilizers (HALS) are present in an amount of 800 to 2,500 ppm, more preferably of 900 to 2,000 ppm, yet more preferably of 1,200 to 1,600 ppm, in the polypropylene composition.

Hindered amine light stabilizers (HALS) are known in the art. Preferably such hindered amine light stabilizers (HALS) are 2,6-alkyl-piperidine derivatives in particular 2,2,6,6-tetramethyl-piperidine derivatives. Especially suitable are hindered amine light stabilizers (HALS) of the formula (V) 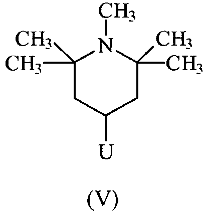 wherein U constitutes the remaining part of the hindered amine light stabilizer (HALS).

The hindered amine light stabilizers (HALS) do not absorb UV radiation, but act to inhibit degradation of the polypropylene. They slow down the photochemically initiated degradation reactions, to some extent in a similar way to antioxidants.

The hindered amine light stabilizers (HALS) show a high efficiency and longevity due to a cyclic process wherein the hindered amine light stabilizers (HALS) are regenerated rather than consumed during the stabilization process. Accordingly, one advantage of the hindered amine light stabilizers (HALS) is that significant levels of stabilization are achieved at relatively low concentrations.

Preferred hindered amine light stabilizer(s) (HALS) is(are) 1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; M_{w} 2286 g/mol) of formula (VI) 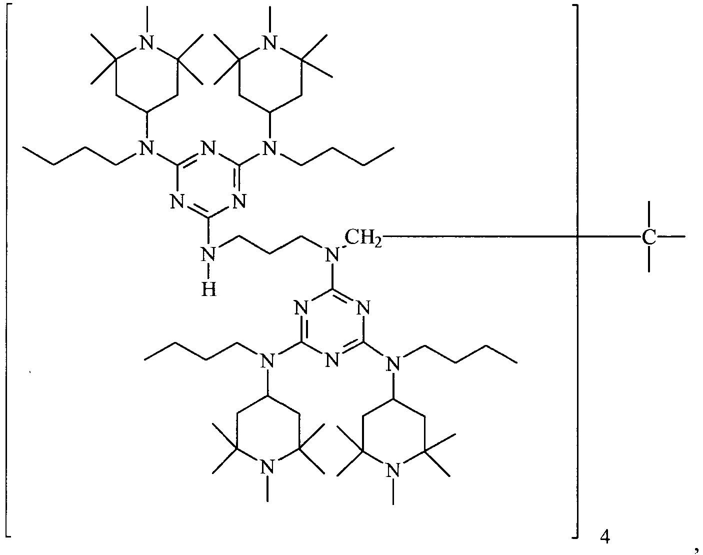 poly((6-((1,1,3,3-tetramethylbutyl)amino)-1,3,5-triazin-2,4-diyl)-(2,2,6,6-tetramethyl-4-piperidyl)imino)-hexamethylen-((2,2,6,6-tetramethyl-4-piperidyl)imino)) (CAS no. 71878-19-8; M_{w} >2,500 g/mol), and
bis-(2,2,6,6-tetramethyl-4-piperidyl) sebacate (CAS no. 52829-07-9; M_{w} 481 g/mol) of formula (VII)

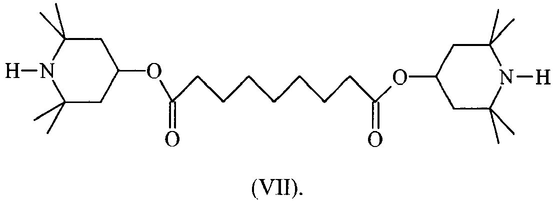

Additionally it is appreciated that the the polypropylene composition comprises at least one slip agent being a fatty acid amide. Accordingly such slip agents are present in an amount of 1,000 to 2,000 ppm, and more preferably of 1,200 to 1,600 ppm, in the polypropylene composition. More preferably the polypropylene composition part comprises only one slip agent. Preferred types of slip agents are unsaturated fatty acid amides. The amount of carbons of the fatty acids is preferably in the range of C10 to C25 carbon atoms.

Accordingly the slip agent(s) is(are) preferably selected from the group consisting of
cis-13-docosenoic amide (CAS no. 112-84-5; M_{w} 337.6 g/mol),
cis-9,10 octadecenoamide (CAS no. 301-02-0; M_{w} 281.5 g/mol)
octadecanoylamide (CAS no. 124-26-5; M_{w} 283.5 g/mol),
behenamide (CAS no. 3061-75-4; M_{w} 339.5 g/mol),
N,N'-ethylene-bis-stearamide (CAS no. 110-30-5; M_{w} 588 g/mol),
N-octadecyl-13-docosenamide (CAS no. 10094-45-8; M_{w} 590 g/mol), and
oleylpalmitamide (CAS no. 16260-09-6; M_{w} 503 g/mol)

Especially suitable is(are) cis-13-docosenoic amide (CAS no. 112-84-5; M_{w} 337.6 g/mol) and/or cis-9,10 octadecenoamide (CAS no. 301-02-0; M_{w} 281.5 g/mol).

The present invention is especially directed to a polymer composition comprising
(a) at least 50 wt.-%, preferably at least 70 wt.-%, more preferably at least 75 wt.-%, heterophasic propylene copolymer (A1),
(b) 150,000 to 300,000 ppm, talc (B),
(c) 500 to 5,000 ppm, more preferably 500 to 3,000 ppm, yet more preferably 200 to 1,000 ppm, of organic antioxidants, especially phenolic antioxidants, like pentaerythrityl-tetrakis (3-(3,5-di-tert-butyl-4-hydroxyphenyl) propionate (CAS no. 6683-19-8; M 1178 g/mol),
(d) from 2,000 to 20,000 ppm, more preferably from 5,000 to 10,000 ppm of the triazine derivative (T) of formula (I), like the triazine derivative (T) of formula (Ia), (Ib) or (Ic), especially (Id), (Ie), (If), most preferably melamine,
(e) optionally 500 to 3,000 ppm, more preferably 500 to 1,500 ppm, yet more preferably 1,000 to 1,500 ppm, of phosphorous antioxidants (E), like tris-(2,4-di-tert-butylphenyl) phosphite (CAS no. 31570-04-4; M 647 g/mol),
(f) optionally 800 to 2,500 ppm, more preferably 900 to 2,000 ppm, preferably 1,200 to 1,600 ppm, of hindered amine light stabilizer(s) with M_{w} higher than 1,000 g/mol, more preferably higher than 2,000 g/mol, like 1,3,5-triazine-2,4,6-triamine, N₅N"'-1,2-ethanediylbis[N-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS no. 106990-43-6; M_{w} 2286 g/mol) of formula (VIII) and/or poly((6-((1,1,3,3-tetramethylbutyl)amino)-1,3,5-triazin-2,4-diyl)-(2,2,6,6-tetramethyl-4-piperidyl)imino)-hexamethylen-((2,2,6,6-tetramethyl-4-piperidyl)imino)) (CAS no. 71878-19-8; M_{w} >2,500 g/mol),
(g) optionally 1,000 to 2,000 ppm, preferably 1,200 to 1,600 ppm, of slip agent being a fatty acid amide, preferably cis-13-docosenoic amide (CAS no. 112-84-5; M_{w} 337.6 g/mol) and/or cis-9,10 Octadecenoamide (CAS no. 301-02-0; M_{w} 281.5 g/mol), more preferably cis-9,10 Octadecenoamide (CAS no. 301-02-0; M_{w} 281.5 g/mol),
based on the polypropylene composition. As stated above it is preferred that the polypropylene composition comprises as polymer polypropylene (A1) only.

The polymer composition of the instant invention is preferably obtained by extruding the polymer and thereby adding the additives as mentioned in the instant invention. Preferably a twin-screw extruder is used, like the twin-screw extruder ZSK40. The polymer composition pelletized with the twin-screw extruder ZSK 40 is used in the headspace emission test according to VDA 277.

Further, as stated, above the present invention is directed to an automotive interior article comprising at least 50 wt.-%, more preferably at least 70 wt.-%, more preferably at least 90 wt.-%, yet more preferably 99.0 wt.-%, like 100 wt.-%, based on said article of a polypropylene composition as defined in the instant invention.

The expression "automotive interior article" throughout the present invention stands for all articles, preferably injection moulded articles, of the inside of automotive interior. Preferred articles are selected from the group consisting of dashboards, step assists, interior trims, ash trays, interior body panels and gear shift levers.

The invention is further directed to blister packaging, in particular to the back sheets of blister packaging, comprising the polymer composition of the instant invention.

The present invention is further described by way of examples.

### EXAMPLES

The following definitions of terms and determination of methods apply for the above general description of the invention as well as to the below examples unless otherwise defined.

### Molecular weights, molecular weight distribution (Mn, Mw, MWD)

Mw/MnMWD are measured by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterised broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**MFR₂ (230 °C)** is measured according to ISO 1133 (230 °C, 2.16 kg load).

**Ethylene content** is measured with Fourier transform infrared spectroscopy (FTIR) calibrated with ¹³C-NMR. When measuring the ethylene content in polypropylene, a thin film of the sample (thickness about 250 µm was prepared by hot-pressing. The area of absorption peaks 720 and 733 cm⁻¹ was measured with Perkin Elmer FTIR 1600 spectrometer. The method was calibrated by ethylene content data measured by ¹³C-NMR.

**Particle size** is measured according to ISO 13320-1:1999

**The xylene solubles (XS, wt.-%):** Content of Xylene solubles (XS) is determined at 23 °C according ISO 6427.

**Flexural Modulus:** The flexural modulus was determined in 3-point-bending according to ISO 178 on injection molded specimens of 80 x 10 x 4 mm prepared in accordance with ISO 294-1:1996.

### VDA 277 (available for instance from "Dokumentation Kraftfahrwesen (DKF); Ulrichstraße 14, 74321 Bietigheim Bissingen)

The content of volatiles is determined according to VDA 277:1995 using a gas chromatography (GC) device with a WCOT-capillary column (wax type) of 0.25 mm inner diameter and 30 m length. The GC settings were as follows: 3 minutes isothermal at 50 °C, heat up to 200 °C at 12 K/min, 4 minutes isothermal at 200 °C, injection-temperature: 200 °C, detection-temperature: 250 °C, carrier helium, flow-mode split 1:20 and average carrier-speed 22 - 27 cm/s.

In addition to the FID detector for the summary volatile evaluation a MS detector is used for the evaluation of the single volatile components. A specific Quadropol MS was used with the following settings: 280 °C transfer-line temperature, scan method with scanning rate of 15 - 600 amu, relative EMV mode, mass calibration with standard spectra autotune, MS source temperature of 230 °C and MS Quad temperature of 150 °C.

The used samples (5 ml minimum; 1.000 +/- 0.001 g sample per 10 ml container volume) have been conditioned at 120 +/-1 °C (5 hours +/- min) in a gastight container and 5 ml gas of the container is subsequently injected by µl-injection in the GC-appartus. In the present invention as samples pellets has been used.

**VDA 270-Method for to detect the sensory impression of smell** (available for instance from "Dokumentation Kraftfahrwesen (DKF); Ulrichstraße 14, 74321 Bietigheim Bissingen)

### Testing sets

a) heat chamber with air circulation according to DIN 50 011-12; accuracy class 2
b) 1 or 3 litre glass testing cup with unscented sealing and lid; the cup, the sealing and the lid have to be cleaned before use.

**Table 1: Specimen**

| **Variant** | **Examples** | **Sample quantity for 1 litre cup** | **Sample quantity for 3 litre cup** |
|---|---|---|---|
| A | Clips, plug, other small parts | 10 +/-1 g | 30 +/-3 g |
| B | Arm rest, ash tray, handhold, sunshade and other medium sized parts | 20 +/-2 g | 60 +/-6 g |
| C | Insulating material, foils, leather, cover fabric, celluar material, like foam, carpets and other large-scale parts | 50 +/-5 g | 150 +/-15 g |

In case of variant C the material thickness is less than 3 mm, in the 1-litre testing cup a specimen of 200+/- 20 cm² is used whereas in the 3-litre testing cup a specimen of 600+/-60 cm² is used. In case the material thickness is more than 20 mm, the specimen used must be trimmed to a size of below 20 mm. Sandwich-assemblies are tested as a whole. In case of small parts, several specimens have to be used to obtain the desired amount to be tested.

### Procedure

Three different storage conditions are available (table 2). In the present application variant 3 has been used.

**Table 2: Storage conditions**

| **Variant** | **Temperature** | **Storage period** | **Note** |
|---|---|---|---|
| 1 | 23+/-2 °C | 24+/- h | a, b, c, d, f |
| 2 | 40+/-2 °C | 24+/- h | a, b, c, d, f |
| 3 | 80+/-2 °C | 2 h +/- 10min | a, c, e, f |

| | | | |
|---|---|---|---|
| a) for variants 1 and 2 50 ml deionized water is added to the 1-litre testing cup and 150 ml deionized water is added to the 3-litre testing cup b) the specimen(s) is/are placed in a manner avoiding direct contact with water c) the testing cup is tightly closed stored in the preheated heat chamber d) for variants 1 and 2 the testing takes place immediately after removal of the testing cup from the heat chamber. e) for variant 3 the testing cup must be cooled down to a temperature of 60+/-5 °C after removal from the heat chamber before being tested; after testing by three testers the testing cup must be stored for 30 minutes at 80-/-2 °C in the heat chamber before further testing is carried out f) the rating must be carried out by at least three testers; differ the individual ratings of the testers in the grading by two points, a repetition of the testing by at least five testers must follow | | | |

### Analysis

The rating of smell for all variants is accomplished by the scale as given in table 3. Grades are given from 1 to 6, whereby half grades are possible.

**Table 3: Rating of smell**

| **Grade** | **Rating** |
|---|---|
| 1 | not noticeable |
| 2 | noticeable; undisturbing |
| 3 | clearly noticeable; but not yet disturbing |
| 4 | disturbing |
| 5 | severely disturbing |
| 6 | intolerable |

The result is given as an average value, rounded by half grades. The used variant is indicated with the result.

In the present application variant C/3 has been used.

### Preparation of examples

**Table 1: Properties of the examples**

| | | **CE 1** | **E 1** |
|---|---|---|---|
| HECO | [Wt.-%] | 65% | 65% |
| AO 1 | [wt.-%] | 0,25% | 0,25% |
| Talc | [wt.-%] | 20% | 20% |
| Melamine | [wt.-%] | - | 1% |
| Odour [VDA 270] | [1-6] | 4 | 3 |
| total content volatile [VDA 277] | [µgC/g] | 30 | 23 |
| Tensile Modulus | [MPa] | 2,000 | 2,000 |

| | | | |
|---|---|---|---|
| HECO: heterophasic propylene copolymer, namely the commercial product EE188HP of Borealis (MFR₂ of 13 g/10 min; xylene soluble content of 20 wt.-%) AO 1: phenolic antioxidant, namely pentaerythrityl-tetrakis(3-(3',5'-di-tert. butyl-4-hydroxyphenyl)-propionate (CAS no 6683-19-8) [IRGANOX 1010] Talc the commercial talc Jetfine 3CA of Luzenac Europe, F Melamine the commercial product MELAMIN of Borealis Agrolinz Melamine GmbH | | | |

## Claims

1. Polymer composition comprising
(a) at least 50 wt.-% of an heterophasic propylene copolymer (A1),
(b) 150, 000 - 300, 000 ppm of talc (B),
(c) 500 to 5,000 ppm of an organic antioxidant (C),
(d) 2,000 to 20,000 ppm of a 1, 3, 5 triazine derivative (T), and
(e) optionally 500 to 3,000 ppm of a phosphorous antioxidant (E), based on the composition,
wherein the 1, 3, 5 triazine derivatives (T) is of formula (I) 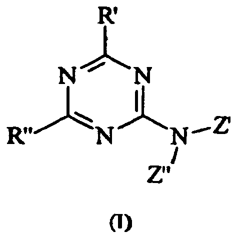 wherein
R' and R" are independently selected from the group, NHZ', NZ'Z", C1 to C10 alkyl, phenyl, and benzyl
Z' and Z" are independently selected from the group H, methyl, ethyl, n-propyl, iso-propyl, n-butyl, tert-butyl, and n-pentyl.

2. Polymer composition according to claim 1, wherein the triazine derivative (T) is melamine.

3. Polymer composition according to claim 1 or 2, wherein the heterophasic propylene copolymer (A1) comprises a polypropylene matrix (A¹) and an amorphous elastomer (A²).

4. Polymer composition according anyone of the preceding claims, wherein the organic antioxidant (C) is a phenolic antioxidant, preferably a sterically hindered phenolic antioxidant.

5. Polymer composition according anyone of the preceding claims, wherein the organic antioxidant (C) is a phenolic antioxidant comprising the residue of formula (I) 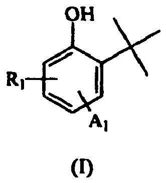 wherein
R₁ being located at the ortho- or meta-position to the hydroxyl-group and R₁ is (CH₃)₃C-, CH₃-or H, preferably (CH₃)₃C-, and
A₁ constitutes the remaining part of the phenolic antioxidant.

6. Polymer composition according to claim 5, wherein the phenolic antioxidant comprises at least one residue of formula (II) 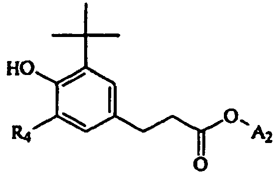 wherein
R₄ is (CH₃)₃C-, CH₃-, or H, preferably (CH₃)₃C-, and
A₂ constitutes the remaining part of the phenolic antioxidant.

7. Polymer composition according anyone of the preceding claims, wherein the polypropylene composition comprises additionally
(a) 1,000 to 2,500 ppm of hindered amine light stabilizer(s) and/or
(b) 1,000 to 2,000 ppm of slip agent(s) being a fatty acid amide(s).

8. Automotive interior article comprising at least 50 wt.-% based on said article of a polymer composition according to any one of the preceding claims.

## Patentansprüche

1. Polymer-Zusammensetzung, umfassend
(a) mindestens 50 Gew.-% von einem heterophasischen Propylen-Copolymer (A1),
(b) 150 000 bis 300 000 ppm Talkum (B),
(c) 500 bis 5 000 ppm von einem organischen Antioxidans (C),
(d) 2 000 bis 20 000 ppm von einem 1,3,5-Triazin-Derivat (T), und
(e) gegebenenfalls 500 bis 3 000 ppm von einem Phosphor-Antioxidans (E),
basierend auf der Zusammensetzung,
wobei die 1,3,5-Triazin-Derivate (T) die Formel (I) aufweisen 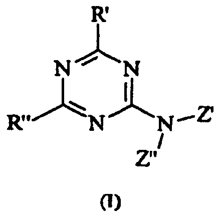 worin
R' und R" unabhängig aus der Gruppe NHZ', NZ'Z", C1 bis C10-Alkyl, Phenyl und Benzyl ausgewählt sind,
Z' und Z" unabhängig aus der Gruppe H, Methyl, Ethyl, n-Propyl, iso-Propyl, n-Butyl, tert-Butyl und n-Pentyl ausgewählt sind.

2. Polymer-Zusammensetzung nach Anspruch 1, wobei das Triazin-Derivat (T) Melamin ist.

3. Polymer-Zusammensetzung nach Anspruch 1 oder 2, wobei das heterophasische Propylen-Copolymer (A1) eine Polypropylen-Matrix (A¹) und ein amorphes Elastomer (A²) umfasst.

4. Polymer-Zusammensetzung nach einem der vorangehenden Ansprüche, wobei das organische Antioxidans (C) ein phenolisches Antioxidans, vorzugsweise ein sterisch gehindertes phenolisches Antioxidans, ist.

5. Polymer-Zusammensetzung nach einem der vorangehenden Ansprüche, wobei das organische Antioxidans (C) ein phenolisches Antioxidans ist, umfassend den Rest der Formel (I) 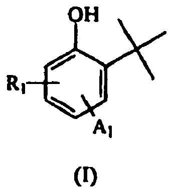 wobei
R₁ an der ortho- oder meta-Position zu der HydroxylGruppe angeordnet ist und R₁ (CH₃)₃C-, CH₃- oder H, vorzugsweise (CH₃)₃C-, ist und
A₁ den verbleibenden Teil von dem phenolischen Antioxidans ausmacht.

6. Polymer-Zusammensetzung nach Anspruch 5, wobei das phenolische Antioxidans mindestens einen Rest der Formel (II) umfasst 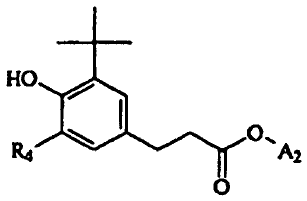 worin
R₄ (CH₃)₃C-, CH₃- oder H, vorzugsweise (CH₃)₃C-, ist und
A₂ den verbleibenden Teil von dem phenolischen Antioxidans ausmacht.

7. Polymer-Zusammensetzung nach einem der vorangehenden Ansprüche, wobei die Polypropylen-Zusammensetzung zusätzlich umfasst
(a) 1 000 bis 2 500 ppm von gehindertem/n Amin-LichtStabilisator(en) und/oder
(b) 1 000 bis 2 000 ppm von Gleitmittel(n), das/die ein Fettsäureamid(e) darstellt/darstellen.

8. Gegenstand für den Fahrzeug-Innenraum, umfassend mindestens 50 Gew.-%, basierend auf dem Gegenstand, von einer Polymer-Zusammensetzung nach einem der vorangehenden Ansprüche.

## Revendications

1. Composition de polymère comprenant
(a) au moins 50 % en poids d'un copolymère de propylène hétérophasique (A1),
(b) 150 000 à 300 000 ppm de talc (B),
(c) 500 à 5 000 ppm d'un antioxydant organique (C),
(d) 2 000 à 20 000 ppm d'un dérivé de 1,3,5-triazine (T), et
(e) éventuellement 500 à 3 000 ppm d'un antioxydant phosphoreux (E),
par rapport à la composition,
dans laquelle le dérivé de 1,3,5-triazine (T) est de formule (I) 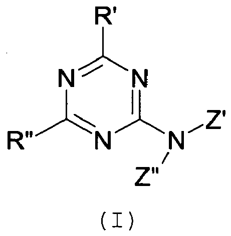 dans laquelle
R' et R" sont indépendamment choisis dans l'ensemble constitué par NHZ', NZ'Z", alkyle en C₁ à C₁₀, phényle et benzyle,
Z' et Z" sont indépendamment choisis dans l'ensemble constitué par H, méthyle, éthyle, n-propyle, isopropyle, n-butyle, tert-butyle et n-pentyle.

2. Composition de polymère selon la revendication 1, dans laquelle le dérivé de triazine (T) est la mélamine.

3. Composition de polymère selon la revendication 1 ou 2, dans laquelle le copolymère de propylène hétérophasique (A1) comprend une matrice de polypropylène (A¹) et un élastomère amorphe (A²).

4. Composition de polymère selon l'une quelconque des revendications précédentes, dans laquelle l'antioxydant organique (C) est un antioxydant phénolique, de préférence un antioxydant phénolique à encombrement stérique.

5. Composition de polymère selon l'une quelconque des revendications précédentes, dans laquelle l'antioxydant organique (C) est un antioxydant phénolique comprenant le résidu de formule (I) 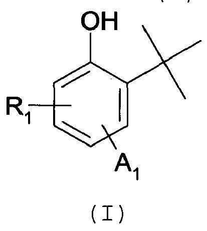 dans laquelle
R₁ est situé en position ortho ou méta vis-à-vis du groupe hydroxyle et R₁ est (CH₃)₃C-, CH₃- ou H, de préférence (CH₃)₃C-, et
A₁ constitue la partie restante de l'antioxydant phénolique.

6. Composition de polymère selon la revendication 5, dans laquelle l'antioxydant phénolique comprend au moins un résidu de formule (II) 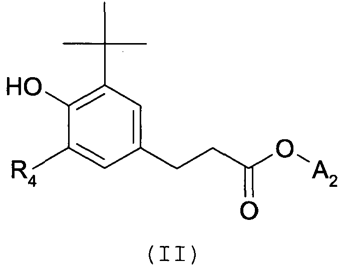 dans laquelle
R₄ est (CH₃)₃C-, CH₃- ou H, de préférence (CH₃)₃C-, et
A₂ constitue la partie restante de l'antioxydant phénolique.

7. Composition de polymère selon l'une quelconque des revendications précédentes, dans laquelle la composition de polypropylène comprend de plus
(a) 1 000 à 2 500 ppm d'un ou plusieurs stabilisant (s) à la lumière de type amine encombrée, et/ou
(b) 1 000 à 2 000 ppm d'un ou plusieurs agent(s) de glissement qui est/sont un ou plusieurs amide(s) d'acide gras.

8. Article d'intérieur d'automobile comprenant au moins 50 % en poids, par rapport audit article, d'une composition de polymère selon l'une quelconque des revendications précédentes.
